(19) Europäisches Patentamt
European Patent Office
Office européen des brevets

(11) **EP 2 830 342 B1**

(12) **FASCICULE DE BREVET EUROPEEN**

(45) Date de publication et mention
de la délivrance du brevet:
**19.07.2017 Bulletin 2017/29**

(51) Int Cl.:
***H04W 16/10*** *(2009.01)*     ***H04W 16/14*** *(2009.01)*
***H04L 5/00*** *(2006.01)*

(21) Numéro de dépôt: **14178413.2**

(22) Date de dépôt: **24.07.2014**

(54) **Procédé de gestion des fréquences HF en utilisation large bande**

Verwaltungsverfahren von HF-Frequenzen bei Verwendung des Breitbandbereichs

Method for managing HF frequencies in broadband communications

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2013 FR 1301792**

(43) Date de publication de la demande:
**28.01.2015 Bulletin 2015/05**

(73) Titulaire: **Thales**
**92400 Courbevoie (FR)**

(72) Inventeurs:
• **Lamy-Bergot, Catherine**
**92622 Gennevilliers Cedex (FR)**

• **Rogier, Jean-Luc**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 458 770**

**Description**

L'invention concerne un procédé pour gérer dynamiquement l'allocation des fréquences dans un contexte large bande qui requiert plus de fréquences que dans un contexte bande étroite, par exemple. Le procédé est utilisé notamment pour les transmissions hautes fréquence, HF, de quatrième génération (4G), notamment dans les cas d'usage suivants: les formes d'onde multiporteuse, en présence ou non de transmissions monocanal, la gestion partagée des fréquences entre différents utilisateurs et services, l'allocation de canaux avec des puissances différentes.

Les liens HF offrent une capacité au-delà de l'horizon ou BLOS (Beyond Line of Sight) qui permet de réaliser des communications à longue, voire très longue distance, sans nécessiter le recours à un satellite ou à l'emploi de stations relais. La gestion des fréquences permet de choisir la ou les fréquences utilisées pour un service donné qui permettent d'assurer le service en question, tout en maintenant une disponibilité des autres services et en respectant les allocations réglementaires notamment en ce qui concerne la puissance maximale et le gabarit radio rayonné hors bande utile. L'état de l'art dans le domaine de la gestion des fréquences en bande HF correspond aux mécanismes dits d'établissement de liaison automatique ou ALE (Automatic Link Establishment) et de maintien de lien ou ALM (Automatic Link Maintenance). Dans le domaine plus général de la radio cognitive, on voit des mécanismes de gestion des fréquences plus fins et appliqués en continu, pour sélectionner une plage de fréquences ou des fréquences en fonction notamment de bilan de liaison et/ou d'occupation des canaux par d'autres utilisateurs.

Selon une première approche, l'état de l'art repose essentiellement sur une allocation statique d'un plan de fréquences constitué par l'ensemble de fréquences et élaboré en préparation de mission, et de protocoles ALE de deuxième ou troisième génération mis en oeuvre lors de la prise de liaison. Le protocole ALE classique consiste à rechercher une fréquence passante, en essayant séquentiellement les différentes fréquences du plan. Selon le mode utilisé, la fréquence retenue peut être la première fréquence satisfaisant les critères de la liaison, ou la «meilleure» fréquence, c'est-à-dire celle qui optimise le critère en question, pour le plan de fréquences considéré. Lors de la communication, le protocole de gestion de la liaison peut être amené à modifier les paramètres de ladite liaison, y compris en relançant une recherche d'une fréquence adéquate, par exemple, via un mécanisme dit ALM. La solution d'allocation classique 2G ou 3G et de maintien de liaison correspondante, «premier arrivé, premier servi» ne permet pas de tenir compte d'éventuels priorités/droits variables selon le service considéré.

Selon une deuxième approche, concernant le cas particulier des formes d'onde utilisant plusieurs canaux non contigus, il est possible de modifier le choix des fréquences en cours de communication, tant que l'on reste dans la même bande de communications, par exemple selon un principe décrit dans la demande de brevet du demandeur WO 2013/053703. Ces différentes solutions de création, puis de gestion du lien reposent sur des allocations de fréquences statiques, du moins à court terme, et localement exclusives entre les différents réseaux. Elles permettent la cohabitation des différents modes de transmission (monocanal, multicanaux) ainsi que de différents services, tels que la phonie, la télégraphie, le courrier électronique, l'intranet, le transfert de fichiers, etc. Même s'il reste la possibilité de faire dépendre ces plans de fréquence de l'heure, de la saison, pour s'adapter aux conditions de propagation à un instant donné, l'allocation reste statique et localement exclusive, ce qui a pour inconvénient de nécessiter globalement un grand nombre de fréquences. La solution de gestion du lien large bande en cours de communication ne résout pas le problème du «premier arrivé, premier servi». Elle ne permet pas de gérer des niveaux de puissances maximales autorisées différents selon les fréquences.

Par ailleurs, selon une troisième approche, il est possible de se rapprocher des techniques dites «radio cognitive» qui développent des principes de partage des fréquences, pour apporter une solution au problème du manque de fréquences. Ces principes reposent sur un typage des fréquences, propre à l'utilisateur et/ou au service considéré. Dans le cas particulier de la HF, on pourra notamment distinguer trois cas d'utilisateurs: l'utilisateur primaire exclusif, l'utilisateur primaire non exclusif, l'utilisateur secondaire. Un utilisateur secondaire se doit de ne pas utiliser la fréquence en cas d'usage par un utilisateur primaire, et de la libérer lorsqu'un utilisateur primaire cherche à l'utiliser. La solution de type radio cognitive avec partage des fréquences entre plusieurs utilisateurs ne permet toutefois pas de gérer spécifiquement des niveaux de puissances variables selon les fréquences. Cette solution suppose que l'on soit capable de détecter et d'identifier d'autres utilisateurs et leur type, donc d'avoir accès à leur signalisation, alors que les communications en bande HF sont généralement chiffrées, plus ou moins protégées.

Les solutions offertes par l'art antérieur présentent notamment de fortes limitations. Elles ne permettent pas de prendre en compte un ensemble d'allocations comportant plusieurs niveaux de puissance, notamment dans le cas des transmissions multicanaux. Une deuxième difficulté apparaît lorsque l'on souhaite combiner un principe de partage des fréquences, avec une gestion conjointe de transmissions monocanal et de transmissions multicanaux. Le principe de base du partage de fréquences consiste à affecter, à chaque canal, un ensemble de services SLA (Service Level Agreement) avec l'attribution de certaines caractéristiques pour chaque SLA: la puissance, le type d'usage primaire ou secondaire.

Le choix d'un ensemble de canaux pour la mise en oeuvre d'une transmission multicanaux exige, par ailleurs, de respecter certaines contraintes, qui portent non seulement sur les canaux individuels mais sur le groupe de canaux retenus: largeur de bande maximale, puissance totale d'émission, gabarit spectral d'émission. L'état de l'art antérieur consiste à regrouper a priori les canaux satisfaisant ces contraintes, ce qui a pour effet de les dédier à la forme d'onde multicanaux, et ce qui va à l'encontre du principe de partage des fréquences.

Les solutions existantes ne permettent pas de prendre en compte facilement le fait d'avoir à gérer des canaux avec des niveaux de puissance différents et de garantir le respect des gabarits associés. Qui plus est, de ce fait, les solutions existantes ne permettent pas à l'allocateur de fréquences de fournir des jeux de fréquences nettement plus importants que les jeux de fréquences requis pour les modes actuels de communication, où les allocations des fréquences avec forte puissance font l'objet d'une réglementation internationale et d'un partage au niveau mondial, du fait du caractère très longue distance de la propagation HF en mode ionosphérique, puisque l'on ne sait pas garantir aisément le respect de puissances limitées.

Chaque fréquence a un certain nombre de services autorisés ou SLA, un niveau de puissance maximal $P_{max}$ autorisé par service SLA et un type d'usage associé; primaire exclusif, primaire non exclusif et secondaire.

Le document EP 2 458 770 divulgue un procédé permettant de sélectionner une sous-bande utile dans une bande de fréquence afin de permettre une augmentation du débit utile d'une transmission HF, en augmentant la largeur de canalisation globale tout en assurant que les perturbations inhérentes au canal de propagation HF n'affectent pas la transmission en limitant indirectement le débit utile.

Le procédé selon l'invention repose notamment sur l'utilisation d'un modèle qui exploite notamment la perception du bruit et de la puissance reçue dans le canal en question. Le procédé va considérer les contraintes tout d'abord pour chacune des porteuses, puis va utiliser un critère d'optimisation globale. Les contraintes devant être satisfaites par la transmission multi-canaux sont exprimées, largeur de bande maximale, puissance, respect du gabarit d'émission résultant du multiplex des fréquences.

L'invention concerne un procédé pour gérer l'allocation dynamique de fréquences HF dans un réseau de communication large bande comprenant plusieurs utilisateurs, un ensemble de fréquences S= {fi}$_{i=1, ,N0}$ étant attribué à chaque utilisateur, une fréquence ayant un ou plusieurs services SLA autorisés, un niveau de puissance maximale $P_{max}$ par services SLA et un type d'usage associé, caractérisé en ce qu'il comporte au moins les étapes suivantes:

pour chaque utilisateur

- déterminer la plage des fréquences passantes pour l'utilisateur pour une liaison et un service SLA considérés, ensemble S',
- établir l'ensemble des fréquences S" autorisées dans la plage d'émission de l'utilisateur avec pour chaque fréquence les différentes configurations de puissance et de modulation, intersection entre l'ensemble S et la plage des fréquences passantes S',
- analyser le spectre reçu, afin de déterminer le ou les fréquences déjà utilisées, et de décider, en fonction de leur type d'usage associé, si elles doivent être exclues, afin de former un ensemble S'" de N fréquences fl possibles,

au niveau de la liaison comprenant les utilisateurs

- pour chaque fréquence fl de l'ensemble S'", déterminer la puissance nécessaire $\tilde{P}_i^i$, $i = 1...N$, $j = 1...m$ pour chacune des m configurations débits/forme d'onde possibles en prenant en compte la limite en puissance sur chaque fréquence fl,
- allouer les fréquences fl de l'ensemble S'" aux différents utilisateurs, leur modulation et leur puissance en tenant compte de contraintes multi-porteuses telles que la bande totale maximale, la puissance totale, la conformité du spectre émis résultant de l'utilisation simultanée des fréquences fl au gabarit fréquentiel de puissance autorisée.

Selon un mode de réalisation, pour un utilisateur et un service considéré SLA on détermine en cours de fonctionnement du procédé la liste des m configurations débits/formes d'ondes envisageables pour le service SLA.

Selon un autre mode de réalisation, on détermine la puissance nécessaire $\tilde{P}_i^i$, $i = 1...N, j = 1...m$ en appliquant la règle :

$$si\tilde{P}_i^i > P_{tot}, alors P_i^j = P_{tot} + 1$$

$$si\tilde{P}_i^i \leq P_{tot}, alors P_i^j = \tilde{P}_i^i$$

Selon une variante de réalisation, on utilise une fonction de coût de type débit/puissance pour déterminer la configuration des fréquences.

On définit par exemple une fonction de coût $\varsigma = \dfrac{débit}{puissance}$ et les coûts $\varsigma_i^j = \dfrac{d^j - d^{j-1}}{P_i^j - P_i^{j-1}}$, et on classe les différents incréments par ordre croissant.

Selon une variante de mise en oeuvre du procédé, l'étape de résolution sous contraintes de l'allocation des fréquences est réalisée selon le critère désiré en utilisant l'un des critères suivants :

recherche d'un débit cible D utilisant une puissance globale minimale

$$\min \sum_{i=1}^{N}\sum_{j=1}^{m} x_i^j P_i^j \ \bigg| \ \sum_{i=1}^{N}\sum_{j=1}^{m} x_i^j d^j \ \geq D$$

recherche d'un débit maximal sous contrainte d'un niveau de puissance d'émission globale total

$$P_{tot} \quad \max \sum_{i=1}^{N}\sum_{j=1}^{m} x_i^j d^j \ \bigg| \ \sum_{i=1}^{N}\sum_{j=1}^{m} x_i^j P_i^j \ < P_{tot}$$

où n est le nombre de canaux de 3kHz maximal considéré.

Il est aussi possible d'utiliser une contrainte d'intégrité du choix de modulation par fréquence, représenté par la variable entière $X_i^j$ :

$$\forall i = 1...N, j = 1...m, x_i^i \in N$$

$$\forall i = 1...N, \sum_{j=1}^{m} x_i^i \leq 1$$

$$\sum_{i=1}^{N} \ \sum_{j=1}^{m} x_i^i \leq n$$

La variable entière peut être égale à 1 lorsque la fréquence $f_i$ est employée avec le $j^{\text{ème}}$ débit $d^j$.

L'invention concerne aussi un système pour gérer l'allocation dynamique de fréquences HF dans un réseau de communication large bande comprenant plusieurs utilisateurs, un ensemble de fréquences S= {fi} $_{i=1,N0}$ étant attribué à chaque utilisateur, une fréquence ayant un ou plusieurs services SLA autorisés, un niveau de puissance maximale $P_{max}$ par services SLA et un type d'usage associé, caractérisé en ce que chaque utilisateur comporte au moins des moyens d'émission/réception un module de communication, un processeur adapté à exécuter les étapes du procédé précitées, une mémoire de stockage de plan de fréquences pour un service SLA.

Le procédé et le système selon l'invention peuvent être utilisés pour les transmissions hautes fréquence de quatrième génération ou 4 G.

D'autres caractéristiques et avantages de la présente invention apparaîtront mieux à la lecture de la description d'un ou plusieurs modes de réalisation qui représentent :

- La figure 1, une illustration de l'allocation de fréquences pour un service et un utilisateur donné, et
- La figure 2, une architecture d'un terminal utilisateur.

Le procédé selon l'invention repose notamment sur la mise en oeuvre d'un modèle permettant d'évaluer le débit pouvant être atteint, pour une puissance d'émission $P_i$, et une modulation donnée $M_j$ par canal $C_k$ de transmission. Le modèle prend notamment en compte la perception du bruit et la puissance reçue sur le canal en question. Le procédé permet notamment de déterminer une solution d'emploi des fréquences respectant les allocations faites.

Les hypothèses pour la mise en oeuvre du procédé selon l'invention sont les suivantes : l'utilisateur se voit allouer par un dispositif d'allocation de fréquences un ensemble S de $N_0$ fréquences.

$$S = \{f_i\}_{i=1..N_0} \ | \ \forall i = 1..N_0 \ f_i : \begin{cases} SLA \ autorisés \\ P_i^{\max}(SLA) \\ type \ d'usage \end{cases}$$

L'ensemble S des fréquences est filtré fréquence par fréquences dans un premier temps en fonction de différents critères, tels que le SLA, la qualité du canal de communication associée à la fréquence et évaluée a priori, la puissance autorisée. Sur le sous-ensemble S' des fréquences résultant de cette étape de filtrage, on détermine compte tenu de la perception de l'environnement de transmission, quelles sont les fréquences utilisables, et compte tenu de la modélisation des performances du système, la relation entre les paramètres de puissance, de modulation et de débit. A l'issue de cette deuxième étape, l'ensemble des fréquences éligibles S", avec leurs différentes configurations de puissance et de modulation est déterminé. La meilleure configuration de fréquences, avec pour chaque fréquence les paramètres associées (puissance, modulation), est alors choisie, de façon à respecter les contraintes relatives au multiplex retenu (bande totale de fréquence utilisé, puissance totale émise, gabarit spectral résultant), à assurer le SLA demandé, et à optimiser le critère souhaité (par exemple débit total/ puissance).

Un grand nombre de fréquences pourront être allouées avec un faible niveau de puissance, par exemple, 20 W, quitte à ce qu'il puisse ne pas être autorisé de les utiliser pour des services bande étroite. Une ou plusieurs fréquences pourront être allouées avec un niveau de puissance plus important, 125 W, 400 W voire 1kW, de façon à offrir une capacité habituelle notamment en mode monocanal bande étroite.

Selon un mode particulier on aura par exemple un service SLA pour la prise de liaison (ALE) qui pourrait permettre de séparer des fréquences dédiées à ALE bande étroite et d'autres pour la communication.

L'exemple qui va être donné à titre d'exemple concerne le cas d'un unique SLA, puisqu'il est possible de définir au besoin des SLA spécifiques correspondant à l'emploi de plusieurs services de SLA différents simultanément.

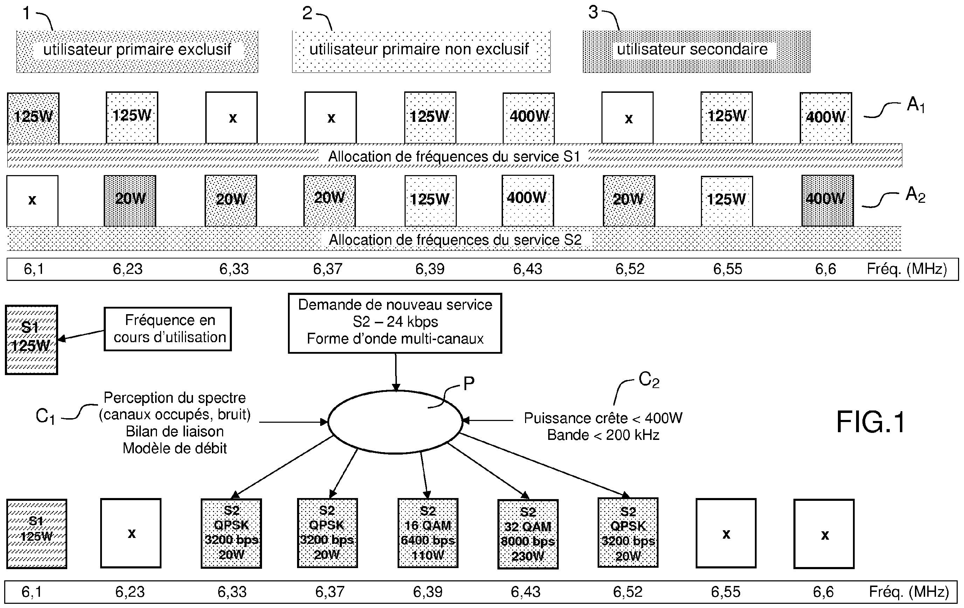

La figure 1 représente un exemple d'allocation de fréquences pour différents utilisateurs, utilisateur primaire exclusif, 1, utilisateur primaire non exclusif, 2, et utilisateur secondaire 3. Le procédé selon l'invention est représenté par le processus d'allocation dynamique P des fréquences, sous contraintes $C_1$ telles que la perception du spectre, le bilan de liaison, etc., et sous contraintes $C_2$, par exemple la puissance crête et la bande. La ligne $A_1$ correspond à un exemple d'allocation de fréquences d'un premier service $A_1$, et la ligne $A_2$ correspond à un exemple d'allocation de fréquences du service $A_2$.

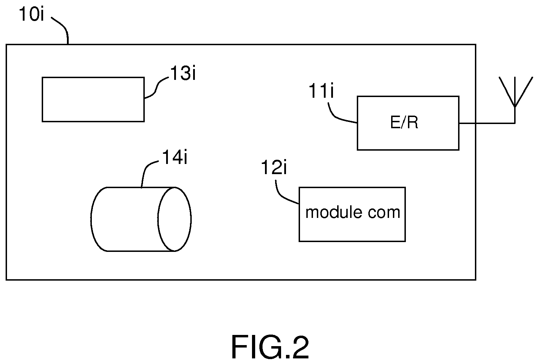

La figure 2 schématise un exemple de système comprenant plusieurs utilisateurs 10i, chaque utilisateur comportant des moyens d'émission/réception 11i, un module de communication 12i, un processeur 13i adapté à exécuter les étapes du procédé selon l'invention, une mémoire 14i de stockage de plan de fréquences pour un service SLA. Les étapes du procédé se déroulent au niveau d'un terminal utilisateur qui va gérer lui-même les fréquences dont il a besoin, ceci lorsque les utilisateurs travaillent dans des sous-bandes distinctes. Dans le cas où plusieurs terminaux utilisateurs partagent une sous-bande, il est possible de définir comme maître du système le terminal utilisateur qui a initié la liaison. Les étapes du procédé selon l'invention vont être données dans ce dernier contexte à titre d'exemple illustratif et nullement limitatif.

Démarrage de l'algorithme exécuté au niveau d'un terminal utilisateur

L'utilisateur souhaite lancer une communication selon le service (SLA). La puissance maximale utilisable est $P_{tot}$.

Etape 1, filtrage hors ligne

Cette première étape regroupe l'ensemble des calculs pouvant être faits sans la connaissance des conditions spécifiques de propagation considérées.

**1-A :** le processeur sélectionne dans S des fréquences autorisées pour le SLA considéré, donnant S', l'ensemble des fréquences autorisées.

**1-B :** il élabore ensuite une liste des formes d'ondes envisageables pour le service considéré SLA et des débits d'intérêts (et de la gamme des valeurs de rapport signal sur bruit SNR cibles associés) dans un canal équivalent de 3kHz, par exemple.

Il est possible d'effectuer ce calcul par plage de bande utile. Par simplicité on se propose dans la suite de considérer le cas où l'on extrapole en n*3kHz y compris pour l'emploi d'une forme d'onde monoporteuse de largeur >3kHz, avec n un nombre entier.

Etape 2, filtrage en ligne

Cette étape regroupe l'ensemble des calculs réalisés en tenant compte des conditions spécifiques de propagation considérées.

**2-A :** le processeur analyse la plage de fréquences sélectionnées (par exemple après une phase d'établissement de liaison ALE, ou parce qu'il s'agit de la dernière plage de fréquences utilisée). Si la plage ne permet d'atteindre le service demandé (ex il n'y a pas assez de fréquences pour un service à haut débit HD), on relance une prise de liaison (ou ALM), et on se ramène à un cas où le service est potentiellement possible.

**2-B :** on filtre alors S' pour obtenir S" l'ensemble des fréquences autorisées dans la plage d'émission de l'utilisateur avec pour chaque fréquence les différentes configurations de puissance et de modulation, intersection entre l'ensemble S et la plage des fréquences passantes S'.

Dans le cas d'une transmission de type XL, telle que celle décrite dans le brevet EP 2458770 du Demandeur, la plage d'émission pourra être de 200 kHz de large.

**2-C :** on analyse le spectre reçu, afin de déterminer les fréquences déjà occupées et de décider, en fonction de leur type d'usage associé, si elles doivent être exclues afin de former un ensemble de fréquences possibles. On mesure, par exemple, le niveau de bruit perçu par une méthode connue de l'Homme du métier, étant en large bande, on prend comme hypothèse que le plus faible niveau de bruit perçu est le plancher de bruit. Pour chaque fréquence fi dans S", on mesure le niveau de bruit et on compare la valeur trouvée à une valeur plancher de bruit évalué selon un principe connu dans le domaine de communication large bande.

Ceci permet d'exclure du plan considéré les fréquences éventuellement déjà occupées sur lesquelles il n'est pas possible d'émettre (niveau perçu nettement supérieur au plancher de bruit), du fait de leur type d'usage associé. Soit S'" l'ensemble des fréquences autorisées résultant de cette séparation.

**2-D :** avec les valeurs de rapport signal sur bruit SNR atteignables pour chaque fréquence de S'", on détermine pour chaque fréquence la puissance nécessaire $\widetilde{P}_i^i$, $i = 1...N$, $j = 1...m$ pour chacune des m configurations débits/forme d'onde sélectionnés en étape 1-B.

Pour toute configuration m, on détermine pour les N fréquences fl dans S'", le niveau de puissance nécessaire associé, avec prise en compte de la limite en puissance sur chaque fi :

$$si\tilde{P}_i^i > P_{tot}, alors P_i^j = P_{tot} + 1$$

$$si\tilde{P}_i^i \leq P_{tot}, alors P_i^j = \tilde{P}_i^i$$

**2-E :** Résolution sous contraintes de l'allocation des fréquences selon le critère désiré.
Plusieurs cas sont notamment envisageables, par exemple :

Recherche d'un débit cible D utilisant une puissance globale minimale. Le critère sera alors

$$\min \sum_{i=1}^{N}\sum_{j=1}^{m} x_i^j P_i^j \left| \sum_{i=1}^{N}\sum_{j=1}^{m} x_i^j d^j \geq D \right. \text{ où } x_i^j$$

est une contrainte d'intégrité détaillée ci-après, Recherche d'un débit maximal sous contrainte d'un niveau de puissance d'émission globale total Ptot (e.g. puissance de l'émetteur considéré). Le critère sera alors

$$\max \sum_{i=1}^{N}\sum_{j=1}^{m} x_i^j d^j \left| \sum_{i=1}^{N}\sum_{j=1}^{m} x_i^j P_i^j < P_{tot} \right. \text{ où } n$$

est le nombre de canaux de 3kHz maximal considéré.

Dans l'exemple donné, $P_{tot}$ désigne la puissance crête ou moyenne. Différentes solutions peuvent être affinées, plusieurs facteurs de recul ou OBO (Output back-off) pouvant être utilisés selon l'emploi ou non d'écrêtage connu sous l'expression anglo-saxonne « clipping », les valeurs de n, le type de modulation. Par défaut, en mode XL il est recommandé d'appliquer un « clipping » de valeur 6 à 8 dB et de travailler par rapport à une puissance moyenne utile.
Dans tous les cas, ces équations s'écrivent avec une contrainte d'intégrité du choix de modulation par fréquence, représenté par la variable entière $x_i^j$ (valant 1 lorsque la fréquence $f_i$ est employée avec le $j^{ème}$ débit $d^j$) :

$$\forall i = 1...N, j = 1...m, x_i^i \in N$$

$$\forall i = 1...N, \sum_{j=1}^{m} x_i^i \leq 1$$

$$\sum_{i=1}^{N} \sum_{j=1}^{m} x_i^i \leq n$$

**2-F :** on ajoute un filtrage sur le la conformité du spectre émis (résultant du multiplex en fréquence) au gabarit fréquentiel de puissance autorisée. Les différentes configurations sont testées et validées ou non selon qu'elles respectent un gabarit souhaité. En particulier, on peut ainsi s'adapter à des configurations antennaires, cosites différentes.

Etape 3, Optimisation en utilisant une fonction de coût

Une manière de procéder est de résoudre le problème en considérant une fonction de coût de type

$$\varsigma = \frac{débit}{puissance}$$ pour déterminer une bonne configuration de fréquences.

En pratique, considérant les fréquences de l'ensemble S''', on définit les coûts $\varsigma_i^j = \dfrac{d^j - d^{j-1}}{P_i^j - P_i^{j-1}}$ que l'on classe, par exemple on classe les différents incréments par ordre croissant.

On additionne alors les incréments les plus faibles pour obtenir la solution au problème considéré (Cf. critère indiqué à l'étape 2-E). A chaque étape, on vérifie les éventuelles contraintes spécifiques (Cf. étape 2-F), en modifiant le cas échéant le coût d'une configuration ne permettant plus le respect de ces contraintes (passage à coût>maximal).

Il est possible d'accélérer le processus, par exemple, en démarrant de l'ensemble des incréments, en retirant les plus élevés pour obtenir la solution à un problème de type débit maximal

Dans tous les cas on peut être amené à recalculer le coût en le mettant à une valeur maximale si une fréquence ne permet pas de respecter les contraintes supplémentaires de type 2-F.

Quelques exemples de mise en oeuvre du procédé vont être donnés à titre illustratif et nullement limitatifs.
En considérant un exemple de fréquences S= {f$_1$°, .., f$_{10}$°} donnant, après filtrage sur les conditions de service et de fréquences passantes l'ensemble

$$S''' = \{f_1, f_2, f_3\}.$$

L'analyse de la bande considérée et les informations de qualité permettent d'attribuer :

f$_1$ : 1W => 3200 b/s ; 3,5 W => 4800 b/s les autres débits étant interdits pour f$_1$ à P$_{max}$ 5W
f$_2$ : 2W => 3200 b/s ; 4,5 W => 4800 b/s ; 8,5W => 6400 b/s les autres débits étant interdits pour f$_2$ à P$_{max}$ 10W
f$_3$ : 3W => 3200 b/s ; 6 W => 4800 b/s ; 10W => 6400 b/s, 20W => 9600 b/s tous ces débits étant ok par rapport à $P_{max}$ 400W pour $f_3$

$$\varsigma_1^1 = 3200/1 = 3200$$

$$\varsigma_1^2 = 1600/2,5 = 640$$

$$\varsigma_2^1 = 3200/2 = 1600$$

$$\varsigma_2^2 = 1600/2,5 = 640$$

$$\varsigma_2^3 = 1600/4 = 400$$

$$\varsigma_3^1 = 3200/3 = 1067$$

$$\varsigma_3^2 = 1600/3 = 533$$

$$\varsigma_3^3 = 1600/4 = 400$$

$$\varsigma_3^4 = 3200/10 = 320$$

on         obtient         *donc* :

$$\varsigma_1^1 \geq \varsigma_2^1 \geq \varsigma_3^1 \geq \varsigma_1^2 \geq \varsigma_2^2 \geq \varsigma_3^2 \geq \varsigma_2^3 \geq \varsigma_3^3 \geq \varsigma_3^4$$

Un débit D de 10kb/s sera donc atteint à puissance minimale en utilisant les trois fréquences $f_1$, $f_2$ et $f_3$ avec $f_1$ à 4800 b/s, $f_2$ à 3200 b/s et $f_3$ à 3200 b/s.

Si une vérification du gabarit résultant montrait un non respect de contraintes, par exemple, du fait du trop grand écartement de $f_2$ par rapport aux autres fréquences, $f_2$ serait éliminé des choix, ses coûts mis au maximum et l'on obtiendrait alors le débit D recherché de 10 kb/s avec $f_1$ à 4800 b/s et $f_3$ à 6400 b/s.

Ce type de problème d'optimisation sous contraintes se traite particulièrement bien avec la classe d'algorithmes par séparation et évaluation connus sous l'expression anglo-saxonne « branch and bound ». Ce principe permet de combiner un procédé récursif d'énumération des combinaisons, avec une évaluation de solutions partielles (variables partiellement affectées) qui évite l'exploration exhaustive des combinaisons. Par exemple, si le critère de puissance maximale n'est pas vérifié pour un ensemble de deux canaux, il est inutile d'explorer tous les autres ensembles incluant ces canaux.

Le procédé selon l'invention permet notamment de déterminer une solution d'emploi des fréquences respectant les allocations faites, et en particulier des limitations pouvant être liées au type de service considéré, à un type d'usage des fréquences et à des contraintes radio de type gabarit, émissions cosites. Le procédé permet de gérer l'affectation de canaux à des transmissions bande étroite ou à des transmissions large bande, sans devoir nécessairement particulariser ces canaux. De fait, le procédé autorise une mise en commun de canaux bande étroite pour ces deux types de transmission. Le procédé permet notamment de prendre en compte le gabarit spectral résultant de la sélection du multiplex et de refuser une configuration qui pourrait ne pas être conforme au standard.

La solution offerte par le procédé selon l'invention offre notamment les avantages suivants :

- elle est compatible des différents standards et critères que l'on peut souhaiter voir respecter, mais également de configurations particulières, les antennes avec largeur de bande plus étroite, par simple modification des règles de filtrage et/ou de la fonction de coût,
- elle est compatible de l'emploi simultané des standards 2G/3G existants par d'autres postes radios partageant un plan commun ou partiellement commun,
- elle permet de déterminer une configuration d'émission optimisée en fonction du critère recherché, débit maximal, puissance minimale à débit donné, etc.

Enfin, le procédé peut être utilisé unilatéralement du côté poste émetteur en fournissant simplement au récepteur, les fréquences retenues.

## Revendications

1. Procédé pour gérer l'allocation dynamique de fréquences HF dans un réseau de communication large bande comprenant plusieurs utilisateurs ($10i$), un ensemble de fréquences S= {fi} $_{i=1, N0}$ étant attribué à chaque utilisateur, une fréquence ayant un ou plusieurs services SLA autorisés, un niveau de puissance maximale $P_{max}$ par services SLA et un type d'usage associé, **caractérisé en ce qu'**il comporte au moins les étapes suivantes:

   pour chaque utilisateur

   • déterminer la plage des fréquences passantes pour l'utilisateur pour une liaison et un service SLA considérés, ensemble S', (2-A),
   • établir l'ensemble des fréquences S" autorisées dans la plage d'émission de l'utilisateur avec pour chaque fréquence les différentes configurations de puissance et de modulation, intersection entre l'ensemble S et la plage des fréquences passantes S', (2-B),
• analyser le spectre reçu, afin de déterminer la ou les fréquences déjà utilisées, et de décider, en fonction de leur type d'usage associé, si elles doivent être exclues, afin de former un ensemble S''' de N fréquences fl possibles, (2-C),

au niveau de la liaison contenant les utilisateurs

• pour chaque fréquence fl de l'ensemble S''', déterminer la puissance nécessaire $\tilde{P}_i^i$, $i = 1...N, j = 1...m$ pour chacune des m configurations débits/forme d'onde possibles en prenant en compte la limite en puissance sur chaque fréquence fl, (2-D),
• allouer les fréquences fl de l'ensemble S''' aux différents utilisateurs, leur modulation et leur puissance en tenant compte de contraintes multi-porteuses telles que la bande totale maximale, la puissance totale, la conformité du spectre émis, résultant de l'utilisation simultanée des fréquences fl, au gabarit fréquentiel de puissance autorisée.

2. Procédé selon la revendication 1 **caractérisé en ce que** pour un utilisateur et un service considéré SLA on détermine en cours de fonctionnement du procédé la liste des m configurations débits/formes d'ondes envisageables pour le service SLA.

3. Procédé selon la revendication 1 **caractérisé en ce qu'**on détermine la puissance nécessaire $\tilde{P}_i^i$, $i = 1...N, j = 1...m$ en appliquant la règle

$$si\,\tilde{P}_i^i > P_{tot}, alors\,P_i^j = P_{tot} + 1$$

$$si\,\tilde{P}_i^i \leq P_{tot}, alors\,P_i^j = \tilde{P}_i^i$$

4. Procédé selon la revendication 1 **caractérisé en ce qu'**on utilise une fonction de coût de type débit/puissance pour déterminer la configuration des fréquences.

5. Procédé selon l'une des revendications 1 à 3 **caractérisé en ce que** l'on définit une fonction de coût $\varsigma = \dfrac{débit}{puissance}$ et les coûts $\varsigma_i^j = \dfrac{d^j - d^{j-1}}{P_i^j - P_i^{j-1}}$ et on classe les différents incréments par ordre croissant.

6. Procédé selon l'une des revendications précédentes **caractérisé en ce que** l'on réalise l'étape de résolution sous contraintes de l'allocation des fréquences selon le critère désiré en utilisant l'un des critères suivants :

recherche d'un débit cible D utilisant une puissance globale minimale

$$\min \sum_{i=1}^{N}\sum_{j=1}^{m} x_i^j P_i^j \left| \sum_{i=1}^{N}\sum_{j=1}^{m} x_i^j d^j \geq D \right.$$

recherche d'un débit maximal sous contrainte d'un niveau de puissance d'émission globale total

$$P_{tot} \quad \max \sum_{i=1}^{N}\sum_{j=1}^{m} x_i^j d^j \left| \sum_{i=1}^{N}\sum_{j=1}^{m} x_i^j P_i^j < P_{tot} \right.$$

où n est le nombre de canaux de 3kHz maximal considéré.

7. Procédé selon la revendication 6 **caractérisé en ce que** l'on utilise une contrainte d'intégrité du choix de modulation par fréquence, représenté par la variable entière $x_i^j$ :

$$\forall i = 1...N, j = 1...m, x_i^i \in N$$

$$\forall i = 1...N, \sum_{j=1}^{m} x_i^i \leq 1$$

$$\sum_{i=1}^{N} \sum_{j=1}^{m} x_i^i \leq n$$

8. Procédé selon la revendication 7 **caractérisé en ce que** la variable entière vaut 1 lorsque la fréquence $f_i$ est employée avec le $j^{ème}$ débit $d^j$.

9. Système pour gérer l'allocation dynamique de fréquences HF dans un réseau de communication large bande comprenant plusieurs utilisateurs, un ensemble de fréquences $S = \{fi\}_{i=1, N0}$ étant attribué à chaque utilisateur, une fréquence ayant un ou plusieurs services SLA autorisés, un niveau de puissance maximale $P_{max}$ par services SLA et un type d'usage associé, **caractérisé en ce que** chaque utilisateur comporte au moinsdes moyens d'émission/réception (11i,) un module de communication (12i), un processeur (13i) adapté à exécuter les étapes du procédé selon l'une des revendications 1 à 8, une mémoire (14i) de stockage de plan de fréquences pour un service SLA.

10. Utilisation du procédé selon l'une des revendications 1 à 8 ou du système selon la revendication 9 pour les transmissions haute fréquence de quatrième génération ou 4G.

**Patentansprüche**

1. Verfahren zum Verwalten der dynamischen Zuordnung von HF-Frequenzen in einem Breitband-Kommunikationsnetz, das mehrere Benutzer (10i) umfasst, wobei jedem Benutzer ein Satz von Frequenzen S={fi} $_{i=1, N0}$ zugeordnet wird, wobei eine Frequenz einen oder mehrere autorisierte SLA-Dienste, einen maximalen Leistungspegel $P_{max}$ durch SLA-Dienste und einen assoziierten Gebrauchstyp hat, **dadurch gekennzeichnet, dass** es wenigstens die folgenden Schritte beinhaltet:

   für jeden Benutzer:

   • Bestimmen des Bereichs von Durchlassfrequenzen für den Benutzer für eine(n) betrachtete(n) Verbindung und SLA-Dienst, Satz S', (2-A),
   • Einrichten des Satzes von autorisierten Frequenzen S" im Sendebereich des Benutzers mit den unterschiedlichen Leistungs- und Modulationskonfigurationen für jede Frequenz, dem Schnittpunkt zwischen dem Satz S und dem Bereich von Durchlassfrequenzen S', (2-B),
   • Analysieren des empfangenen Spektrums, um die eine oder die mehreren bereits benutzten Frequenzen zu bestimmen und in Abhängigkeit von ihrem assoziierten Gebrauchstyp zu entscheiden, ob sie ausgeschlossen werden müssen, um einen Satz S'" von N möglichen Frequenzen fl zu bilden, (2-C),

   an der die Benutzer enthaltenden Verbindung:

   • Bestimmen, für jede Frequenz fl des Satzes S'", der notwendigen Leistung $\tilde{P}_i^i$, $i = 1...N$, $j = 1...m$ für jede der m möglichen Durchsatz/Wellenform-Konfigurationen, unter Berücksichtigung der Leistungsgrenze auf jeder Frequenz fl, (2-D),
   • Zuordnen der Frequenzen fl des Satzes S'" zu den verschiedenen Benutzern, deren Modulation und deren Leistung unter Berücksichtigung von Mehrträgerbeschränkungen wie maximale Gesamtbandbreite, Gesamtleistung, Konformität des gesendeten Spektrums, resultierend aus der gleichzeitigen Nutzung der Frequenzen fl, auf dem Frequenzgang von autorisierter Leistung.

2. Verfahren nach Anspruch 1, **dadurch gekennzeichnet, dass** für einen Benutzer und einen betrachteten SLA-Dienst während des Ablaufs des Verfahrens die Liste der m realisierbaren Durchsatz/Wellenform-Konfigurationen für den SLA-Dienst bestimmt wird.

3. Verfahren nach Anspruch 1, **dadurch gekennzeichnet, dass** die notwendige Leistung $\tilde{P}_i^i$, $i = 1...N$, $j = 1...m$ durch Anwenden der Regel

$$Wenn\, \tilde{P}_i^i > P_{tot}, \quad dann \quad P_i^j = P_{tot} + 1$$

$$Wenn\, \tilde{P}_i^i \leq P_{tot}, \quad dann \quad P_i^j = \tilde{P}_i^i$$

bestimmt wird.

4. Verfahren nach Anspruch 1, **dadurch gekennzeichnet, dass** eine Kostenfunktion des Durchsatz/Leistung-Typs zum Bestimmen der Konfiguration der Frequenzen benutzt wird.

5. Verfahren nach einem der Ansprüche 1 bis 3, **dadurch gekennzeichnet, dass** eine Kostenfunktion $\varsigma = \dfrac{Durchsatz}{Leistung}$ und die Kosten $\varsigma_i^j = \dfrac{d^j - d^{j-1}}{P_i^j - P_i^{j-1}}$ definiert werden und die unterschiedlichen Inkremente in aufsteigender Reihenfolge klassifiziert werden.

6. Verfahren nach einem der vorherigen Ansprüche, **dadurch gekennzeichnet, dass** der Auflösungsschritt unter Beschränkungen der Zuordnung der Frequenzen gemäß dem gewünschten Kriterium anhand von einem der folgenden Kriterien durchgeführt wird:

   Suchen eines Zieldurchsatzes D, der eine minimale Gesamtleistung

$$\min \sum_{i=1}^{N} \sum_{j=1}^{m} x_i^j P_i^j \; \left| \; \sum_{i=1}^{N} \sum_{j=1}^{m} x_i^j d^j \geq D \right.$$

   verwendet
   Suchen eines maximalen Durchsatzes unter der Beschränkung eines globalen Gesamtsende-

leistungspegels

$$P_{tot} \quad \max \sum_{i=1}^{N}\sum_{j=1}^{m} x_i^j d^j \left| \sum_{i=1}^{N}\sum_{j=1}^{m} x_i^j P_i^j \right. < P_{tot}$$

wobei n die betrachtete Höchstzahl von 3 kHz-Kanälen ist.

7. Verfahren nach Anspruch 6, **dadurch gekennzeichnet, dass** eine Integritätsbeschränkung der Modulationswahl nach Frequenz benutzt wird, repräsentiert durch die Integer-Variable $X_i^j$:

$$\forall i = 1...N, j = 1...m, x_i^i \in N$$

$$\forall i = 1...N, \sum_{j=1}^{m} x_i^i \leq 1$$

$$\sum_{i=1}^{N}\sum_{j=1}^{m} x_i^i \leq n .$$

8. Verfahren nach Anspruch 7, **dadurch gekennzeichnet, dass** die Integer-Variable den Wert 1 hat, wenn die Frequenz $f_i$ mit dem j-ten Durchsatz $d^j$ benutzt wird.

9. System zum Verwalten der dynamischen Zuweisung von HF-Frequenzen in einem Breitband-Kommunikationsnetz, das mehrere Benutzer umfasst, wobei jedem Benutzer ein Satz von Frequenzen S={fi}$_{i=1,N0}$ zugeordnet wird, wobei eine Frequenz einen oder mehrere autorisierte SLA-Dienste, einen maximalen Leistungspegel $P_{max}$ durch SLA-Dienste und einen assoziierten Gebrauchstyp hat, **dadurch gekennzeichnet, dass** jeder Benutzer wenigstens Sende-/Empfangsmittel (11i), ein Kommunikationsmodul (12i), einen Prozessor (13i), ausgelegt zum Ausführen der Schritte des Verfahrens nach einem der Ansprüche 1 bis 8, einen Speicher (14i) zum Speichern des Frequenzplans für einen SLA- Dienst umfasst.

10. Anwendung des Verfahrens nach einem der Ansprüche 1 bis 8 oder des Systems nach Anspruch 9 für Hochfrequenzübertragungen der vierten Generation oder 4G.

**Claims**

1. - Method for dynamic HF frequency allocation management in a broadband communication network containing a plurality of users (10i), a set of frequencies S= {fi} $_{i=1, N0}$ being allocated to each user, one frequency having one or more authorised SLA services, a maximum power level $P_{max}$ for each SLA service and an associated usage type, **characterized in that** it comprises at least the following steps:

for each user

• determining the range of passing frequencies for the user for a given link and SLA service, set S', (2-A),
• establishing the set of authorised frequencies S" in the transmission range of the user with the different power and modulation configurations for each frequency, intersection between the set S and the range of passing frequencies S', (2-B),
• analysing the received spectrum in order to determine the frequency or frequencies already used and deciding, on the basis of their associated usage type, whether they must be excluded in order to form a set S'" of N possible frequencies fl, (2-C),

at the level of the link containing the users

• for each frequency fl of the set S'", determining the necessary power $\widetilde{P}_i^i$, $i = 1...N$, $j = 1...m$ for each of the m possible rate/waveform configurations, taking into account the power limit on each frequency fl, (2-D)
• allocating the frequencies fl of the set S'" to the different users, their modulation and their power, by taking account of multi-carrier constraints such as the maximum total band, the total power, the conformity of the transmitted spectrum resulting from the simultaneous use of the frequencies fl with the authorised power frequency pattern.

2. - Method according to Claim 1 **characterized in that** for a user and a service SLA concerned, the list of the m conceivable rate/waveform configurations for the service SLA is determined during the operation of the method.

3. - Method according to Claim 1 **characterized in that** the necessary power $\widetilde{P}_i^i$, $i = 1...N, j = 1...m$ is determined by applying the following rule:

$$if \widetilde{P}_i^i > P_{tot}, then P_i^j = P_{tot} + 1$$

$$if \widetilde{P}_i^i \leq P_{tot}, then P_i^j = \widetilde{P}_i^i$$

4. - Method according to Claim 1 **characterized in that** a rate/power type cost function is used to determine the frequency configuration.

5. - Method according to any one of claims 1 to 3 **characterized in that** a cost function $\varsigma = \dfrac{rate}{power}$ and the costs $\varsigma_i^j = \dfrac{d^j - d^{j-1}}{P_i^j - P_i^{j-1}}$ are defined and the different increments are arranged in ascending order.

6. - Method according to any one of the preceding claims **characterized in that** the step of resolution under frequency allocation constraints is carried out according to the required criterion by using one of the following criteria:

determining a target rate D using a minimum overall power

$$\min \sum_{i=1}^{N} \sum_{j=1}^{m} x_i^j P_i^j \left| \sum_{i=1}^{N} \sum_{j=1}^{m} x_i^j d^j \right. \geq D$$

determining a maximum rate under the constraint of a total overall transmit power level

$$P_{tot} \quad \max \sum_{i=1}^{N} \sum_{j=1}^{m} x_i^j d^j \left| \sum_{i=1}^{N} \sum_{j=1}^{m} x_i^j P_i^j < P_{tot} \right. ,$$

where n is the maximum number of 3 kHz channels concerned.

7. - Method according to Claim 6 **characterized in that** an integrity constraint of the frequency modulation choice is used, represented by the integral variable $x_i^j$:

$$\forall i = 1...N, j = 1...m, x_i^i \in N$$

$$\forall i = 1...N, \sum_{j=1}^{m} x_i^i \leq 1$$

$$\sum_{i=1}^{N} \sum_{j=1}^{m} x_i^i \leq n$$

8. - Method according to Claim 7 **characterized in that** the integral variable has the value 1 when the frequency $f_i$ is used with the $j^{th}$ rate $d^j$.

9. - System for dynamic HF frequency allocation management in a broadband communication network including a plurality of users, a set of frequencies S= $\{fi\}_{i=1,N0}$ being allocated to each user, one frequency having one or more authorised services SLA, a maximum power level $P_{max}$ for each service SLA and an associated usage type, **characterized in that** each user comprises at least transmit/receive means (11 i), a communication module (12i), a processor (13i) adapted for carrying out the steps of the method according to any one of claims 1 to 8, a frequency plan storage memory (14i) for a service SLA.

10. - Use of the method according to any one of claims 1 to 8 or of the system according to claim 9 for fourth-generation or 4G high-frequency transmissions.

FIG.1

10i

13i

11i

E/R

14i

12i

module com

# FIG.2

**EP 2 830 342 B1**

## RÉFÉRENCES CITÉES DANS LA DESCRIPTION

### Documents brevets cités dans la description

- WO 2013053703 A

- EP 2458770 A